# EUROPÄISCHE PATENTSCHRIFT

(11) **EP 0 531 881 B1**
(45) Veröffentlichungstag und Bekanntmachung des Hinweises auf die Patenterteilung: **15.11.1995**
(21) Anmeldenummer: 92115053.8
(22) Anmeldetag: 03.09.1992
(51) Int. Cl.: B60J 7/043

(54) **Fahrzeugdach**
Vehicle roof
Toit de véhicule

(30) Priorität: 07.09.1991 DE 4129850
(43) Veröffentlichungstag der Anmeldung: 17.03.1993
(73) Patentinhaber: WEBASTO KAROSSERIESYSTEME GmbH, D-82131 Stockdorf (DE)
(72) Erfinder: Salz, Wolfram, W-8035 Stockdorf (DE); Miklosi, Stefan, W-8000 München 60 (DE); Reihl, Peter, W-8000 München 60 (DE)
(74) Vertreter: Wiese, Gerhard

(56) Entgegenhaltungen:
- DE-A- 3 404 153
- DE-A- 3 725 982
- GB-A- 437 589
- GB-A- 444 152

## Beschreibung

Die Erfindung bezieht sich auf ein Fahrzeugdach mit wenigstens zwei zum wahlweisen Verschließen oder wenigstens teilweisen Freilegen einer Dachöffnung in einer festen Dachfläche dienenden Deckeln, denen jeweils mindestens eine Ausstelleinrichtung zugeordnet ist und mit einer mit den Ausstelleinrichtungen in Antriebsverbindung stehenden gemeinsamen Antriebseinrichtung.

Aus DE-A-38 01 881 ist eine Verstellvorrichtung für ein Fahrzeug-Sonnendach mit zwei in Fahrzeuglängsrichtung hintereinander angeordneten Deckeln bekannt. Hierbei handelt es sich vorzugsweise um ein sogenanntes Spoilerdach. Es ist eine Hubvorrichtung vorgesehen, die vordere und hintere Kulissenführungen zum Anheben und Absenken des vorderen Teils des Deckels um einen kleineren Betrag sowie des hinteren Teils des Deckels um einen größeren Betrag aufweist. Die Kulissenführung zum Anheben und Absenken der Deckel ist ortsfest am Dachrahmen in Längsrichtung derselben vorgesehen, und mit den Kulissenführungen arbeiten Schlitten zusammen, welche in zwei sich zu beiden Seiten der Dachöffnung erstreckenden Führungsschienen verschiebbar geführt sind. Mit Hilfe einer gemeinsamen Antriebseinrichtung, die von einem Antriebskabel gebildet werden kann, läßt sich der vordere Deckel öffnen, bevor der hintere Deckel geöffnet wird, und der vordere Deckel wird erst geschlossen, nachdem der hintere Deckel geschlossen ist. Eine unabhängige Betätigung des hinteren Deckels ist trotz des relativ komplizierten Aufbaus dieses Daches nicht möglich.

Aus DE-A-19 46 161 ist ein Schiebedach für Kraftfahrzeuge bekannt, bei dem zwei starre Schiebedeckelteile von etwa gleicher Flächengröße vorgesehen sind, welche eine Dachöffnung verschließen und teilweise freilegen können, die von einem Schiebedachrahmen eingefaßt ist. Die Deckelteile sind relativ zueinander in Fahrzeuglängsrichtung verschiebbar geführt. Auch hierbei sind zu beiden Seiten der Dachöffnung befestigte Führungskulissen vorgesehen. Über eine gemeinsame Antriebseinrichtung können die Deckelteile in vorbestimmter Abfolge des Bewegungsablaufes ausgestellt und/oder längsverschoben werden. Die gemeinsame Antriebseinrichtung umfaßt eine Doppel-Antriebskabelanordnung, wobei mit Hilfe einer entsprechenden Verstellbewegung des Betätigungsorgans eine der beiden Antriebskabelanordnungen in Wirkverbindung mit der Antriebseinrichtung gebracht werden kann. Dabei handelt es sich um eine Kombination, bei der ein Deckelteil in Art einer Lüftungsklappe ausstellbar und ein weiteres Deckelteil in Form eines Schiebedachs verfahrbar ist. Auch hierbei sind komplizierte und viel Einbauraum in Anspruch nehmende Führungen und Schlittenteile für das Zusammenarbeiten mit den Führungsschlitzen in der Führungskulisse erforderlich.

Aus DE-A-34 04 153 ist ein Öffnungsmechanismus für ein Oberfirstschiebedach bekannt, bei dem eine Kniehebelanordnung zur Deckelausstellung mit einem Kulissenschlitz in einer ortsfesten Kulisse zusammenarbeitet, wobei die Kniehebelanordnung mit Gleitsteinen und Gleitschuhen bewegungsverbunden ist. Auch eine solche Auslegung nimmt relativ viel Einbauraum insbesondere in Breitenrichtung des Fahrzeugdachs gesehen in Anspruch.

Die Erfindung zielt darauf ab, ein Fahrzeugdach der eingangs genannten Art mit wenigstens zwei Deckeln bereitzustellen, welches auf konstruktiv einfache Weise mit möglichst geringem Einbauraum und unter vereinfachter Betätigung ein unabhängiges Beaufschlagen der Deckel zum wahlweisen Verschließen oder wenigstens teilweisen Öffnen einer Dachöffnung in einer festen Dachfläche eines Kraftfahrzeugs gestattet.

Nach der Erfindung zeichnet sich ein solches Fahrzeugdach dadurch aus, daß die Ausstelleinrichtungen derart ausgebildet sind, daß beim Betätigen der gemeinsamen Antriebseinrichtung die Ausstelleinrichtung nur jeweils eines Deckels funktionsbeaufschlagt ist (sind), während die Ausstelleinrichtung(en) des anderen Deckels bzw. der anderen Deckel ohne Funktionsbeaufschlagung ist (sind).

Dabei weist vorzugsweise jede der Ausstelleinrichtungen eine Ausstellmechanik und eine Nockenbahnanordnung auf, die mittels der gemeinsamen Antriebseinrichtung jeweils relativ zueinander verschiebbar sind, wobei die Nockenbahnanordnungen mit Nockenbahnen versehen sind, die so gestaltet sind, daß die Ausstellmechanik(en) jeweils nur eines Deckels im Zusammenwirken mit der (den) zugehörigen Nockenbahn(en) funktionsbeaufschlagt ist (sind), während die Ausstellmechanik(en) des bzw. der anderen Deckel im Zusammenwirken mit der (den) Nockenbahn(en) der zugeordneten Nockenbahnanordnung(en) einen Leerweg zurücklegt. Als Nockenbahnanordnungen eignen sich insbesondere mit Kulissenschlitzen versehene Kulissen. Es können jedoch auch offene Nockenführungen vorgesehen werden, gegen die ein Nockenstößel oder dergleichen durch Federkraft angedrückt wird.

Bei dem erfindungsgemäßen Fahrzeugdach sind vorzugsweise jedem Deckel wenigstens eine Nockenbahnanordnung und eine damit zusammenwirkende Ausstellmechanik zugeordnet, die mittels der gemeinsamen Antriebseinrichtung relativ zueinander verstellbar sind. Dabei können die Nockenbahnanordnungen oder die Ausstellmechaniken vorzugsweise gleichzeitig über die Antriebseinrichtung verschiebbar sein. Durch entsprechende Ausbildung der Nockenbahnen, vorzugsweise Kulissenschlitze, der Nockenbahnanordnungen, welche bei jedem Betätigungsvorgang relativ zur Ausstellmechanik vorzugsweise einen gleichen Verschiebeweg zurücklegen, wird erreicht, daß nur eine Ausstellmechanik eines Deckels funktionsbeaufschlagt wird, während die Nockenbahnanordnung des anderen Deckels relativ zu ihrer Ausstellmechanik zwar auch einen Verschiebeweg zurücklegt, bei dem es sich aber um einen Leerweg handelt, d.h. einen Weg, bei dem die betreffende Ausstellmechanik keine Funktionsbeaufschlagung erfährt.

Durch diese erfindungsgemäße Auslegung können Arretiereinrichtungen für die jeweiligen Deckel oder Deckelteile beim Einsatz einer gemeinsamen Antriebsverbindung entfallen. Insgesamt gesehen umfaßt daher das erfindungsgemäß ausgebildete Fahrzeugdach eine geringere Anzahl von Bauteilen, welche relativ wenig Einbauraum in Anspruch nehmen und eine vereinfachte Montage gestatten. Da beim erfindungsgemäß ausgebildeten Fahrzeugdach eine gemeinsame Antriebseinrichtung vorgesehen ist, läßt sich diese an einer geeigneten Stelle am Fahrzeugdach anordnen, zu der der Fahrer und/oder der Beifahrer einen leichten Zugang haben, so daß die Deckel dieses Fahrzeugdachs auf bedienungsfreundliche Weise mit einer Einhandbetätigung bedient werden können.

Eine besonders einfache Ausführungsform ergibt sich, wenn jedem Deckel eine einzige Ausstelleinrichtung zugeordnet ist, bei welcher die Relativbewegung zwischen Nockenbahnanordnung und Ausstellmechanismus bevorzugt quer zur Fahrzeuglängsrichtung verläuft und deren Angriff am Deckel etwa hinten in Deckelmitte erfolgt.

Bei einer solchen Ausführungsform kann die Relativbewegung von Nockenbahnanordnung und Ausstellmechanismus am einen Deckel entgegengesetzt zu der am anderen Deckel gerichtet sein. Dies hat den Vorteil, daß die Nockenbahnanordnungen, vorzugsweise Kulissen, sowohl bezüglich der Ausbildung der Nockenbahn als auch bezüglich ihrer Anordnung zur Fahrzeuglängsachse gleich sind.

Bei einer anderen bevorzugten Ausführungsform sind jedem Deckel zwei Ausstelleinrichtungen zugeordnet. Die Zuordnung erfolgt vorzugsweise so, daß die Relativbewegung der einem Deckel zugeordneten Nockenbahnanordnungen gegenüber den jeweiligen Ausstellmechanismen jeweils gegenläufig zueinander gerichtet ist. Eine solche Ausführungsform mit jeweils zwei Ausstelleinrichtungen pro Deckel führt zu einer noch stabileren Abstützung des Deckels in Ausstellposition.

Die Relativbewegung von Nockenbahnanordnungen und Ausstellmechanismen kann zum einen dadurch realisiert werden, daß die Nockenbahnanordnungen verschiebbar und die Ausstellmechanismen ortsfest gelagert sind. Sie ist jedoch ebenso realisierbar dadurch, daß die Ausstellmechanismen verschiebbar und die Nockenanordnungen ortsfest gelagert sind.

Bei Verwendung in einem Doppeldeckel-Hebedach erfolgt die Anordnung der Kulissenanordnungen und Ausstellmechanismen bevorzugt so, daß ihre Relativbewegung quer zur Fahrzeuglängsrichtung erfolgt. Dadurch ist eine platzsparende Anordnung im Bereich der Deckelhinterkanten möglich, wodurch durch Wegfall seitlicher Ausstelleinrichtungen die Deckelbreite vergrößert werden kann.

Gemäß einer bevorzugten Ausführungsform sind die Nockenbahnanordnungen bzw. die Ausstellmechanismen mit der gemeinsamen Antriebseinrichtung über ein einziges Antriebskabel bewegungsverbunden. Hierdurch erhält man eine noch weitergehende Vereinfachung des erfindungsgemäß ausgebildeten Fahrzeugdaches mit wenigstens zwei ausstellbaren Deckeln, denn man kann die den Deckeln zugeordneten Nockenbahnanordnungen dank der synchronen Verschiebebewegung in hintereinander geschalteter Antriebsverbindung vorsehen.

Um günstigere Krafteinleitungs-, Reibungs- und Verschleißverhältnisse zu erreichen, kann insbesondere bei zwei Nockenanordnungen und Ausstellmechanismus-Paaren je Deckel jedem dieser Paare ein gesondertes Antriebskabel zugeordnet sein, wobei dann die gesonderten Antriebskabel mit der gemeinsamen Antriebseinrichtung bewegungsverbunden sind. Die Verbindung kann dabei so erfolgen, daß die Antriebskabel eines Deckels auf derselben Fahrzeugseite über ein Kabelverbindungsstück mit jeweils einem Antriebskabel gekuppelt sind. Die gesonderten Antriebskabel können jedoch ebenso direkt bis zur Antriebseinrichtung durchgeführt sein und dort beispielsweise in mehrere vorzugsweise übereinander angeordnete und synchron betätigte Ritzel eingreifen.

Die Kulissenschlitze jeder Kulisse weisen vorzugsweise drei parallel zur Richtung der Relativbewegung liegende Schlitzabschnitte auf, von denen zwei außen auf gleicher Höhe liegende Schlitzabschnitte mit einem inneren, parallel beabstandet dazu liegenden Schlitzabschnitt über einen schräg ansteigenden bzw. einen schräg abfallenden Schlitzabschnitt verbunden sind. Dabei ist dem inneren parallelen Schlitzabschnitt die Schließposition und den zwei außenliegenden parallelen Schlitzabschnitten jeweils eine volle Öffnungsposition des Deckels zugeordnet. Die dazwischen liegenden schräg ansteigenden bzw. abfallenden Schlitzabschnitte dienen der Überführung vom einen in den anderen Zustand. Die Kulissen können bei derartig ausgebildeten Kulissenschlitzen vollkommen identisch in ihrer Ausbildung sein und werden je nach Einsatz beim vorderen oder hinteren Deckel links oder rechts der Fahrzeuglängsachse in der einen oder in der um 180° dazu gedrehten spiegelbildlichen anderen Position eingesetzt. Dadurch wird eine rationelle Fertigung der Kulissenschlitze möglich.

Die Ausstellmechanik weist vorzugsweise einen am Deckel drehbar und/oder parallel dazu verschiebbar angelenkten Ausstellhebel auf, der entweder unmittelbar oder mittelbar durch Anlenkung an einen Umlenkhebel durch die zugeordnete Nockenbahnanordnung schwenkbar ist. Das unmittelbare Zusammenwirken eines Ausstellhebels mit einer Nockenbahnanordnung, beispielsweise Kulisse, hat den Vorteil einer sehr einfachen, aus wenigen Teilen bestehenden Anordnung, wohingegen die Zwischenschaltung eines Umlenkhebels eine größere Übersetzung ermöglicht; d.h., bei relativ flach verlaufenden ansteigenden bzw. abfallenden Nockenbahnabschnitten wird dennoch eine große Ausstellhöhe des Deckels ermöglicht.

Zweckmäßig ist das Deckelverbindungsende des Ausstellhebels mit dem Deckel höhenverstellbar und lösbar verbunden, um Einjustierungen der Deckel nach dem Einbau des Fahrzeugdachs vornehmen zu können.

Zweckmäßigerweise ist das Fahrzeugdach derart ausgelegt, daß wenigstens zwei vorzugsweise in Fahrzeuglängsrichtung hintereinander angeordneten Deckel in einem gemeinsamen, in die Dachöffnung der festen Dachfläche eingesetzten Rahmen angeordnet sind. Hierdurch vereinfacht sich der Einbau eines derartigen Fahrzeugdachs, denn man muß in die feste Dachfläche nur eine Öffnung einschneiden und für die gesamte Deckelanordnung des Fahrzeugdachs nur einen Rahmen vorsehen.

Zum verbesserten optischen Aussehen des Fahrzeugdachs kann beim erfindungsgemäß ausgebildeten Fahrzeugdach die Auslegung derart getroffen werden, daß die Deckel aneinanderstoßen, so daß kein festes Dachteil dazwischen liegt. Falls erwünscht kann gegebenenfalls zwischen den Deckeln ein festes Dachteil oder ein unterhalb des Stoßstelle der Deckel quer zur Fahrzeuglängsrichtung verlaufender Rahmensteg vorgesehen werden, an dem bevorzugt die Ausstelleinrichtung des davor liegenden Deckels und auch die Einheit zur Betätigung des Deckels angeordnet ist.

Gemäß einer bevorzugten Ausführungsform wird die gemeinsame Antriebseinrichtung vor dem in Fahrtrichtung vorne liegenden Deckel angeordnet. Diese Stelle ist vom Fahrer und Beifahrer sehr leicht zugänglich, so daß man eine bedienungsfreundliche Auslegung eines solchen Fahrzeugdachs mit mehreren Deckeln erhält.

Die Antriebseinrichtung zur Bewegungsbeaufschlagung der Deckel läßt sich beispielsweise jedoch auch zwischen zwei Deckeln anordnen, wenn diese Stelle bedienungsfreundlicher für die Fahrzeuginsassen zugänglich ist. Das Grundprinzip der erfindungsgemäßen Auslegungsform des Fahrzeugdaches bleibt in allen diesen Fällen unverändert, so daß mittels der erfindungsgemäßen Lösung eine Vielfalt von Mehrdeckeldächern realisierbar ist.

Bevorzugte Ausführungsformen der Erfindung werden nachstehend unter Bezugnahme auf die Zeichnung näher erläutert. Darin zeigt:
- Fig. 1: eine schematische perspektivische Ansicht eines Fahrzeugs mit einem Fahrzeugdach nach der Erfindung,
- Fig. 1a: eine Ausschnittsansicht von Fig. 1 in perspektivischer Darstellung zur Verdeutlichung einer mit dem Deckel zusammenarbeitenden Ausstelleinrichtung,
- Fig. 2: die Schnittansicht längs der Linie II-II in Fig. 1,
- Fig. 3: die Draufsicht auf Fig. 2 bei abgenommenem Deckel in teilweise geschrittener Darstellung,
- Fig. 4: die Schnittansicht längs der Linie IV-IV in Fig. 2,
- Fig. 5: eine perspektivische Ansicht auf das Fahrzeugdach vom Fahrzeuginnenraum aus gesehen, und
- Fig. 6: eine schematische Darstellung eines Fahrzeugdachs mit zwei Deckeln und je einer bewegten Kulisse pro Deckel,
- Fig. 7: eine schematische Darstellung einer Variante zur Fig. 6 mit je zwei bewegbaren Ausstelleinrichtungen pro Deckel,
- Fig. 8: einen vergrößerten Ausschnitt der in Fig. 7 mit c bezeichneten Ausstelleinrichtung im Bereich der rechten Hinterkante des hinteren Deckels.

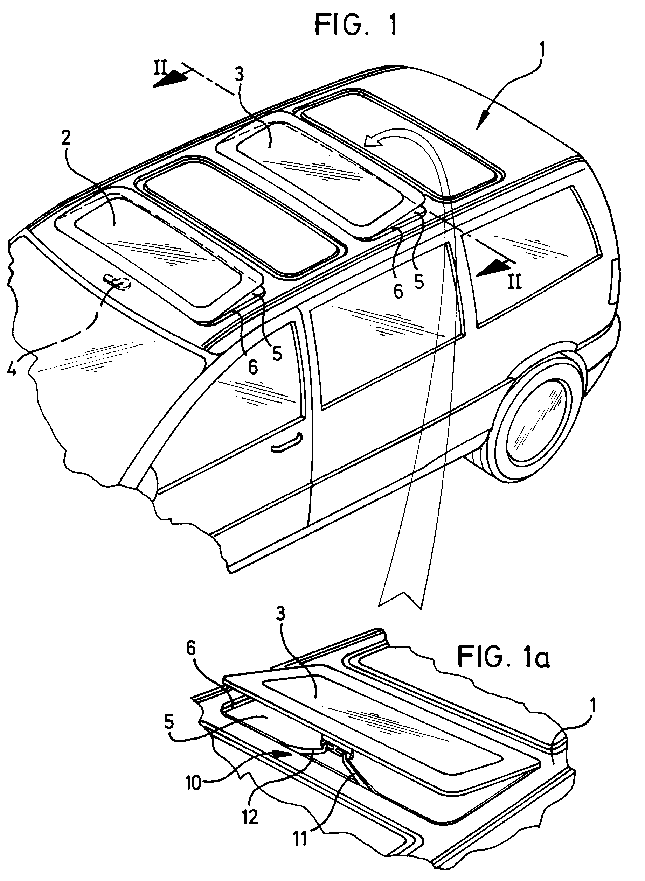

Wie aus den Fig. 1 und 1a zu ersehen ist, hat ein schematisch dargestelltes Fahrzeug eine feste Dachfläche 1, in welcher wenigstens zwei Deckel 2 und 3 angeordnet sind, welche mittels einer einzigen, vor dem vorderen Deckel 2 liegenden und in Fig. 1 schematisch dargestellten Antriebseinrichtung 4 in die in Fig. 1 gezeigte Ausstellage gebracht werden können. Beim dargestellten Beispiel sind die beiden Deckel 2 und 3 lediglich als eine mögliche Ausführungsvariante in Fahrzeuglängsrichtung gesehen hintereinander liegend angeordnet. Mit Hilfe dieser Antriebseinrichtung 4 können die Deckel 2 und 3 wahlweise unabhängig voneinander auch in eine entsprechende Schließstellung gebracht werden. Beim dargestellten Beispiel werden die Deckel 2 und 3 von einem transparenten Material, einem sogenannten Glasdeckel, gebildet. Natürlich können auch andersartig ausgebildete Deckel, beispielsweise aus Blech eingesetzt werden.

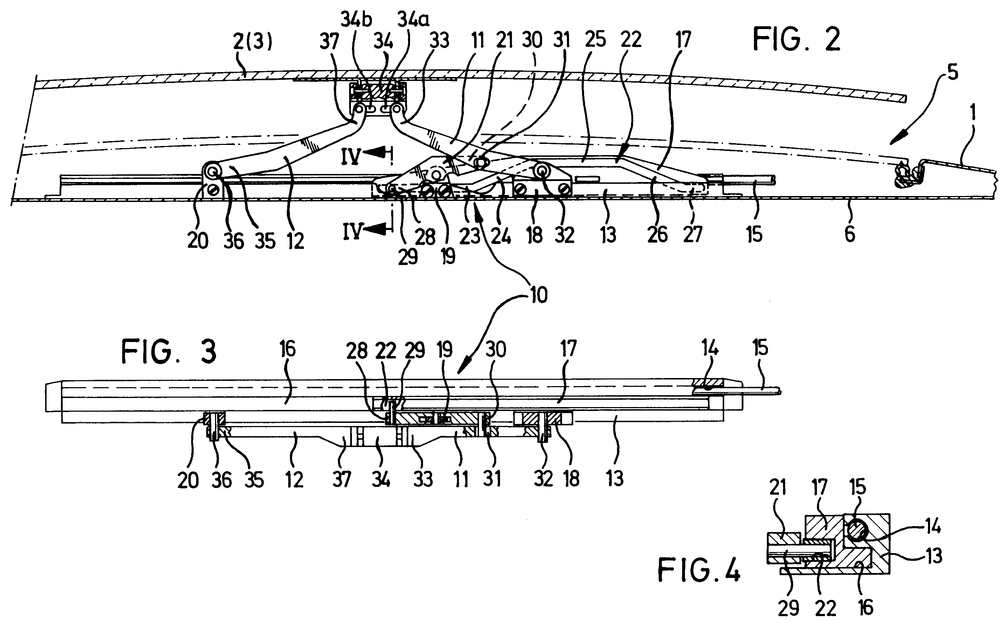

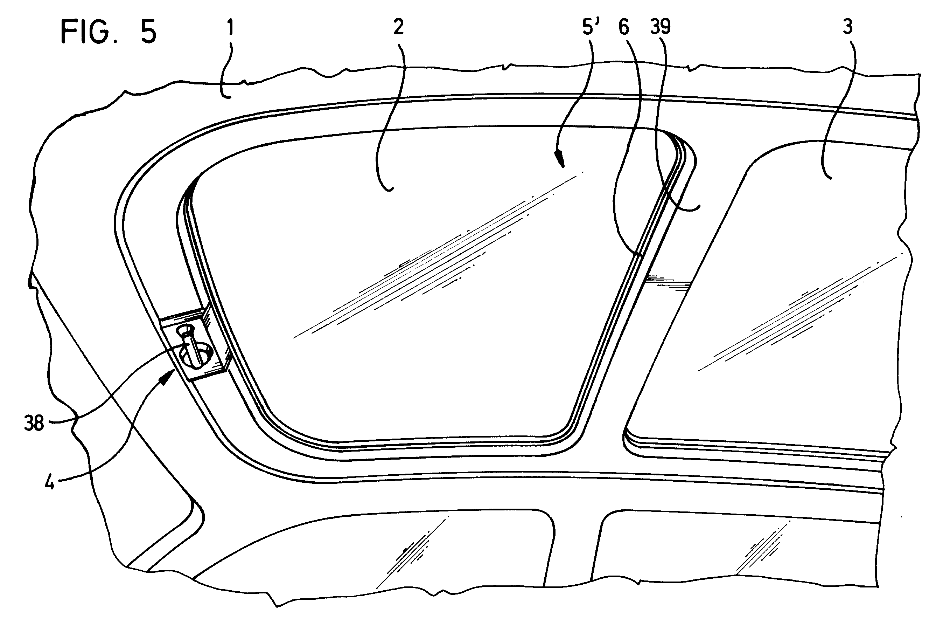

In der festen Dachfläche 1 ist beim in Fig. 1 dargestellten Beispiel für jeden Deckel 2 bzw. 3 eine entsprechende Dachöffnung 5 vorgesehen. In Fig. 5 hingegen ist für die beiden hintereinander angeordneten Deckel 2 und 3 eine gemeinsame Dachöffnung 5' vorgesehen, wobei in diese Dachöffnung 5 bzw. 5' ein beispielsweise aus Fig. 2 zu ersehender Rahmen 6 eingesetzt werden kann, welcher die Ausstellmechanik und deren Verbindungen zur Antriebseinrichtung 4 aufnimmt.

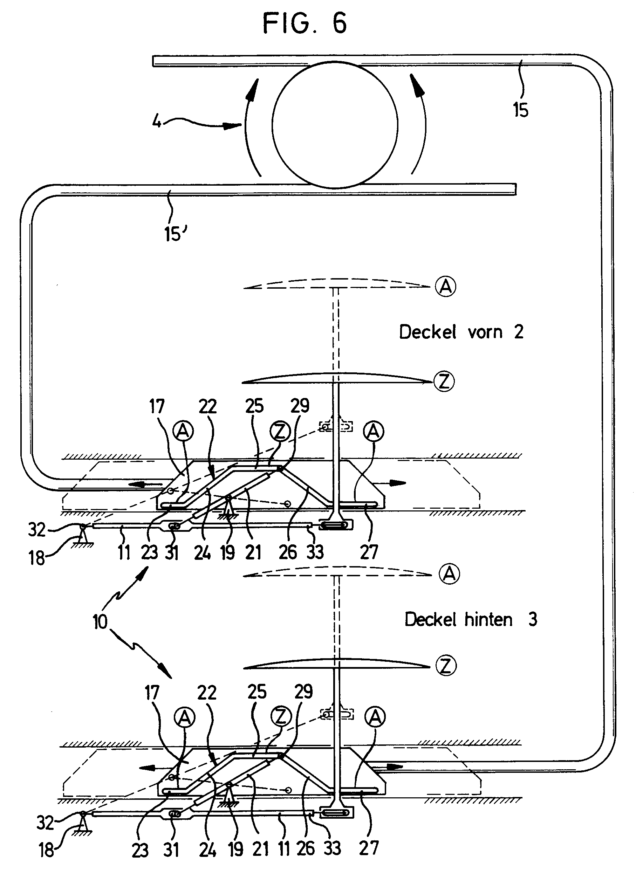

In der Ausschnittsansicht gemäß Fig. 1a ist schematisch eine Ausstelleinrichtung 10 gezeigt, welche quer zur Fahrzeuglängsrichtung etwa mittig liegend angeordnet ist und einen Ausstellhebel 11 und einen Schlepphebel 12 umfaßt, an welche der Deckel 3 angebunden ist, wobei die Ausstelleirrichtung 10 in Fig. 1a in der Ausstellstellung des Deckels 3 gezeigt ist. Nähere Einzelheiten dieser Ausstelleinrichtung 10 werden nachstehend insbesondere anhand der Fig. 2 bis 4 näher erläutert. Das Funktionsprinzip wird dann insbesondere in Verbindung mit Fig. 6 näher beschrieben.

In den Fig. 2 und 3 ist eine bevorzugte Ausführungsform einer Ausstelleinrichtung 10 gezeigt, welche beispielsweise dem hinteren Deckel 3 in Fig. 1 zugeordnet ist. Die Ausstelleinrichtung 10 ist quer zur Fahrzeuglängsrichtung beim Beispiel angebracht und umfaßt einen leistenförmigen Grundkörper 13, welcher dachfest am Rahmen 6 oder an der festen Dachfläche 1 angebracht ist. Dieser leistenförmige Grundkörper 13 trägt sämtliche wesentlichen Einzelheiten der Ausstelleinrichtung 10 und die Verbindungen zur gemeinsamen Antriebseinrichtung 4. Wie insbesondere aus Fig. 4 zu ersehen ist, ist in dem leistenförmigen Grundkörper 13 ein Führungskanal 14 ausgebildet, in dem ein drucksteifes Antriebskabel 15 geführt ist, welches in Antriebsverbindung mit der Antriebseinrichtung 4 steht. Ferner ist in den leistenförmigen Grundkörper 13 eine Schienenführung 16 als Längsführung integriert, welche zur Führung einer der Ausstelleinrichtung 10 zugeordneten Kulisse 17 dient. An dem Grundkörper 13 sind in Längsrichtung im Abstand angeordnete Lagerböcke 18, 19 bzw. 20 beispielsweise mit Hilfe von Schrauben fest angebracht. Der Lagerbock 18 dient zur dachfesten Drehlagerung des Ausstellhebels 11, der Lagerbock 19 dient zur dachfesten Lagerung eines Umlenkhebels 21, und der Lagerbock 20 dient zur dachfesten Lagerung des Schlepphebels 12. Über diese Lagerböcke 18 bis 20 sind somit alle wesentlichen zur Bewegung des Deckels 2 bzw. 3 notwendigen, beweglichen Teile dachfest bzw. rahmenfest abgestützt.

Die Ausstelleinrichtung 10 umfaßt eine längs der Schienenführung 16 bewegliche Kulisse 17. In der Kulisse 17 ist ein insgesamt mit 22 bezeichneter Kulissenschlitz ausgebildet. Wie insbesondere aus Fig. 2 zu ersehen ist, umfaßt der Kulissenschlitz 22 einen ersten, etwa parallel zur Verschieberichtung verlaufenden Schlitzabschnitt 23, einen ansteigenden Schlitzabschnitt 24, welcher sich an den ersten Schlitzabschnitt 23 anschließt, einen weiteren, parallel zur Verschieberichtung verlaufenden Schlitzabschnitt 25, welcher in einem Abstand zum ersten Schlitzabschnitt 23 angeordnet ist, einen abfallenden Schlitzabschnitt 26, welcher sich an den Schlitzabschnitt 25 anschließt, und einen in Höhe des ersten Schlitzahschnitts 23 ebenfalls zur Verschieberichtung parallel verlaufenden Schlitzabschnitt 27, mit dem der Kulissenschlitz 22 in der Kulisse 17 ausläuft. Der erste Schlitzabschnitt 23 und der weitere, parallel in gleicher Höhe verlaufende Schlitzabschnitt 27 sind bei der dargestellten Ausstelleinrichtung 10 der Ausstellstellung des Deckels 2 bzw. 3 zugeordnet, während der Schlitzabschnitt 25 der Schließstellung des Deckels 2 bzw. 3 zugeordnet ist. Der ansteigende Schlitzabschnitt 24 und der abfallende Schlitzabschritt 26 dienen jeweils zur Funktionsbeaufschlagung der Ausstelleinrichtungen zur Ausführung einer Ausstell- oder Schließbewegung.

Ferner umfaßt die Ausstelleinrichtung 10 den Umlenkhebel 21, welcher etwa in der Mitte mittels des Lagerbocks 19 um eine Drehachse dachfest gelagert ist. Das mit 28 bezeichnete Ende des Umlenkhebels 21 trägt nach Fig. 3 einen Zapfen 29, welcher in den Kulissenschlitz 22 eingreift. Das andere Ende 30 des Umlenkhebels 21 ist unter Einhaltung eines Längsspieles mit Hilfe eines Langlochs 31, das im Ausstellhebel 11 vorgesehen ist, mit dem Ausstellhebel 11 verbunden. Dieser Umlenkhebel 21 bewegt entsprechend der Vorgabe durch die jeweiligen Schlitzabschnitte 23 bis 27 des Kulissenschlitzes 22 den Ausstellhebel 11 und dreht diesen um einen dachfesten Drehpunkt 32 im Bereich des Lagerbocks 18. Das andere Ende 33 des Ausstellhebels 11 ist wie gezeigt an dem Deckel 2 bzw. 3 beispielsweise über eine mit einem im wesentlichen horizontal verlaufenden Schlitz 34a versehene Lasche 34 etwa in der Mitte in Querrichtung des Deckels 2 bzw. 3 gesehen angebunden.

Die Ausstelleinrichtung 10 umfaßt zusätzlich den Schlepphebel 12, welcher im wesentlichen gleich wie der Ausstellhebel 11 ausgebildet ist, aber spiegelsymmetrisch zu demselben angeordnet ist, wie dies insbesondere aus Fig. 2 zu ersehen ist. Das mit 35 bezeichnete Ende des Schlepphebels 12 ist über den Lagerbock 20 dachfest um eine Drehachse 36 gelagert. Das andere Ende 37 des Schlepphebels 12 ist auf analoge Weise wie der Ausstellhebel 11 beispielsweise über einen Schlitz 34b der Lasche 34 am Deckel 2 bzw. 3 angebunden.

Auf der Innenansicht in Fig. 5 ist eine Antriebseinrichtung 4 mit einem Betätigungsorgan 38 erkennbar, welche an einer leicht für den Fahrer zugänglichen Stelle vor dem vorderen Deckel 2 angeordnet ist. Obgleich in Fig. 5 eine mechanische Antriebseinrichtung 4 verdeutlicht ist, kann diese selbstverständlich auch durch eine elektrisch angetriebene Antriebseinrichtung ersetzt werden. Gegebenenfalls kann die einzige und zentrale Antriebseinrichtung 4 auch in dem Zwischenbereicht zwischen den beiden Deckeln 2 und 3 angeordnet werden, falls diese Stelle bei bestimmten Fahrzeugtypen leichter zugänglich für die Fahrzeuginsassen ist. Bei dem in Fig. 5 gezeigten Beispiel liegen die beiden Deckel 2 und 3 unmittelbar angrenzend in Fahrzeuglängsrichtung hintereinander, wobei die Deckel 2 und 3 unmittelbar bei einer Ausstelleinrichtung 10 aneinanderstoßen können oder auch eine Trennfuge zwischen denselben vorhanden sein kann. In den mit 39 in Fig. 5 bezeichneten Bereich ist über der dort dargestellten Innenverkleidung die Ausstelleinrichtung 10 mit ihren zugeordneten Teilen untergebracht, so daß sie vom Fahrzeuginnenraum aus nicht zu sehen ist.

Unter Bezugnahme auf Fig. 6 sollen nunmehr die Funktionsweisen für die Bewegungen der Deckel 2 und 3 im Zusammenwirken mit den Ausstelleinrichtungen 10 näher erläutert werden. Bei diesem dargestellten Ausführungsbeispiel sind die den beiden Deckein 2 und 3 zugeordneten Kulissen 17 übereinstimmend ausgebildet, wobei die näheren Einzelheiten zuvor anhand den Fig. 2 bis 4 näher erläutert wurden. Auch die übrigen Teile der Ausstelleinrichtung 10, welche bereits voranstehend bezüglich ihren Einzelheiten erläutert wurden, sind übereinstimmend für die beiden Deckel 2 und 3 ausgelegt, so daß eine nähere Erläuterung desselben entfallen kann. In der Prinzipskizze nach Fig. 6 sind die Umlenkhebel 21 und der Ausstellhebel 11 hinsichtlich ihren Bewegungsverknüpfungen und Lagerungen aus Übersichtlichkeitsgründen rein schematisch verdeutlicht, während die näheren Einzelheiten voranstehend erläutert wurden. Da der Schlepphebel 12 auf die Funktion zum Ausstellen und Schließen der Deckel 2 und 3 keinen Einfluß hat, ist er in der Prinzipskizze nach Fig. 6 weggelassen. Die Ausstellage der Deckel 2 und 3 und der zugeordneten Hebelverbindungen der Ausstelleinrichtung 10 sind in Fig. 6 in gebrochenen Linien eingetragen. In durchgezogenen Linien sind die Deckel 2 und 3 in ihrer Schließstellung angedeutet. Der mit einem Kreis umgebenen Buchstabe A bezieht sich auf die Ausstellage des Deckels 2 bzw. 3, während der Buchstabe Z sich auf die Schließstellung bezieht. Diese Bedeutungen sind in Fig. 6 auch den entsprechenden Kulissenschlitzabschnitten 23 bis 27 der Kulissenschlitze 22 in den Kulissen 17 zugeordnet. Bei der in Fig. 6 gezeigten Version ist jede Kulisse 17 mittels eines gesonderten drucksteif geführten Antriebskabels 15 bzw. 15' mit der gemeinsamen Antriebseinrichtung 4 verbunden. Bei einer Betätigung der Antriebseinrichtung 4 werden die Kulissen 17 über die Antriebskabel 15 bzw. 15' synchron in Gegenrichtungen längs ihrer Schienenführung 16, d.h. insbesondere gleichzeitig und um gleiche Verfahrwege verschoben.

Ausgehend von der in Fig. 6 gezeigten Nullage der Antriebseinrichtung 4, in der beide Deckel 2 und 3 in der Schließstellung sind, wird bei einer Drehbewegung der Antriebseinrichtung in Uhrzeigerrichtung bei einer synchronen Bewegung der Kulissen 17 der hintere Deckel 3 durch Zusammenwirken des Zapfens 29 am Umlenkhebel 21 mit dem Schlitzabschnitt 26 ausgestellt, während die Kulisse für den vorderen Deckel 2 einen Leerweg im Bereich des Schlitzabschnitts 25 zurücklegt, so daß die zugeordnete Ausstelleinrichtung 10 nicht funktionsbeaufschlagt wird und daher der vordere Deckel 2 in der Schließstellung bleibt. Bei einer Weiterdrehung der Antriebseinrichtung 4 in Uhrzeigerrichtung wird dann der Ausstellhebel 11 des vorderen Deckels 2 über den Umlenkhebel 21 und die Wirkverbindung mit dem Kulissenschlitz 22 im Bereich des ansteigenden Schlitzabschnitts 24 ausgestellt, während der hintere Deckel 3 in der Ausstellage bleibt, da hierbei dessen Ausstelleinrichtung 10 den Schlitzabschnitt 27 durchläuft und somit nicht funktionsbeaufschlagt ist. Bei einer mit einer Deckelbetätigung verbundenen Verschiebebewegung der Kulisse 17 des vorderen Deckels 2 synchron zur Kulisse 17 des hinteren Deckels 3 durchläuft die Kulisse 17 des hinteren Deckels 3 einen Leerweg. Wenn die Antriebseinrichtung 4 wiederum beispielsweise in die Nullage zurückgebracht wird, werden die Deckel 2 und 3 in umgekehrter Reihenfolge wie bei der Ausstellbewegung wiederum geschlossen. Ausgehend von dieser Nullage wird bei einer Verdrehung der Antriebseinrichtung 4 in Gegenuhrzeigerrichtung in analoger Weise wie zuvor beschrieben der vordere Deckel 2 über die Ausstelleinrichtung 10 im Zusammenwirken mit der zugeordneten Kulisse 17 ausgestellt, während der hintere Deckel 3 funktionsunbeaufschlagt bleibt indem deren Ausstelleinrichtung einen Leerweg in der zugeordneten Kulisse 17 zurücklegt. Bei einer weiteren Drehung in Gegenuhrzeigerrichtung bleibt dann der vordere Deckel 2 in seiner Ausstellage, da seine Kulisse einen Leerweg durchfährt, während der hintere Deckel 3 funktionsbeaufschlagt wird und die Ausstelleinrichtung 10 den hinteren Deckel 3 über den Umlenkhebel 21 infolge Zusammenspiels des Zapfen 29 mit dem Schlitzabschnitt 24 und über den Ausstellhebel 11 in seine Ausstellage bringt. Wird dann die Antriebseinrichtung 4 wiederum im Uhrzeigersinn zurückgedreht, so werden die Deckel 3 und 2 entsprechend in umgekehrter Reihenfolge wie zuvor erläutert wiederum in ihre Schließlage gebracht. Die Antriebseinrichtung 4 nimmt dann ihre Nullage ein.

In Abweichung von dem dargestellten Funktionsschema nach Fig. 6 können die Kulissen 17 auch in gleicher Richtung synchron verfahren werden, wobei dann in Nullage die Zapfen 29 des Umlenkhebels 21 an entgegengesetzten Enden des Schlitzabschnitts 25 anliegen. Ferner reicht zur unabhängigen und wahlweisen Betätigung der beiden Deckel 2 und 3 gegebenenfalls auch nur ein Antriebskabel aus, über welches die den beiden Deckeln 2 und 3 zugeordneten Kulissen 17 hintereinandergeschaltet synchron bewegbar sind.

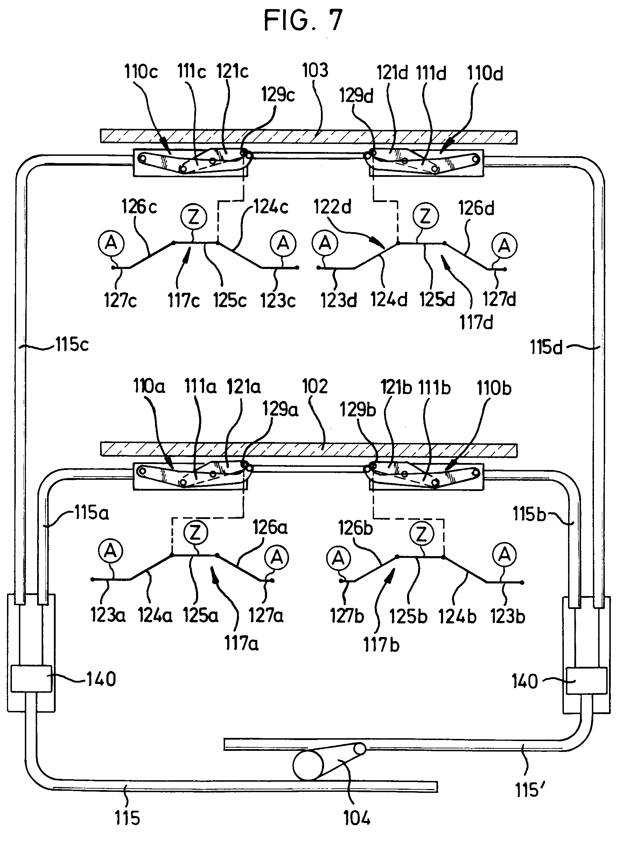

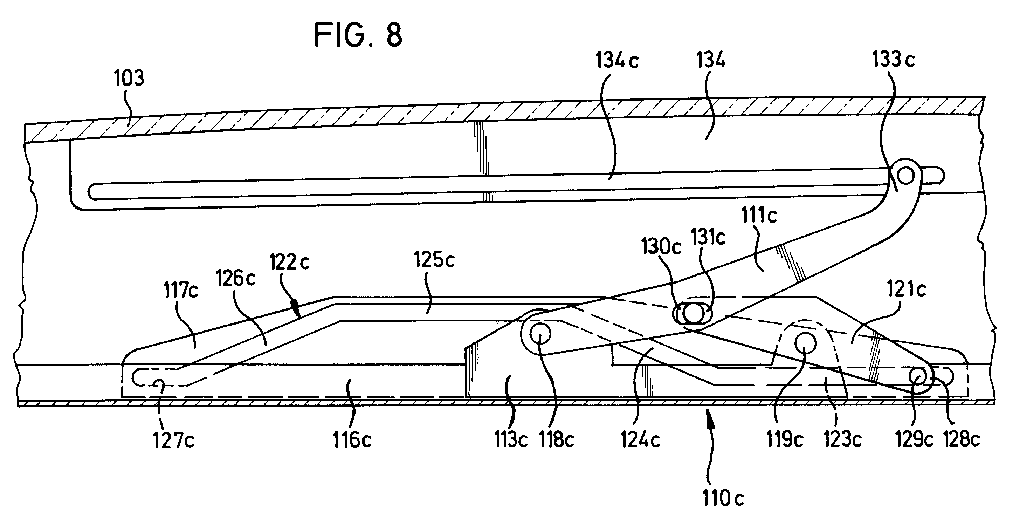

Bei einem zweiten in den Fig. 7 und 8 verdeutlichten Ausführungsbeispiel sind der vordere Deckel 102 und der hintere Deckel 103 an ihrer Hinterkante mit jeweils zwei Ausstelleinrichtungen 110a, 110b bzw. 110c, 110d verbunden. Im Unterschied zum ersten Ausführungsbeispiel, bei dem die Ausstellmechanik dach- bzw. rahmenfest angeordnet und die mit Kulissenschlitzen versehenen Kulissen bewegbar sind, ist hier eine kinematische Umkehr vorgesehen. Wie Fig. 8 im Detail zu entnehmen ist, sind bei jeder Ausstelleinrichtung 110a,b,c,d ein Ausstellhebel 111 und ein Umlenkhebel 121 auf einem bewegbaren Schlitten 113 drehbar gelagert. Der Schlitten 113 steht mit einem Antriebskabel 115, 115', 115a, 115b, 115c, 115d in Antriebsverbindung. Der Ausstellhebel 111 steht an einem Ende mit einem in einer deckelfesten Lasche 134 vorgesehenen Schlitz 134c in Verbindung. Das andere Ende des Ausstellhebels 111 ist mittels eines Lagerbolzens 118 am verschiebbaren Schlitten 113 drehbar gelagert. Am verschiebbaren Schlitten 113 ist ferner etwa mittig ein zweiseitiger Umlenkhebel 121 mittels eines Lagerbolzens 119 drehbar gelagert. Der Umlenkhebel 121 trägt an seinem einen Ende einen Zapfen 129, der mit einem in einer rahmenfesten Kulisse 117 angeordneten Kulissenschlitz 122 in Eingriff steht. Das andere Ende des Umlenkhebels 121 steht über eine Bolzen/Langlochverbindung in Verbindung mit dem Ausstellhebel 111.

Der insgesamt mit 122 bezeichnete Kulissenschlitz setzt sich aus drei parallelen in Einbaulage im wesenlichen horizontal verlaufenden Abschnitten 123, 125 und 127 zusammen, von denen die beiden äußeren Abschnitte 123 und 127 auf gleicher Höhe liegen, während der mittlere Abschnitt 125 parallel dazu in der Höhe beabstandet angeordnet ist. Der mittlere Abschnitt 125 steht mit den beiden äußeren Abschnitten 123 bzw. 127 über ansteigende bzw. abfallende Abschnitte 124 bzw. 126 in Verbindung. Die Deckel 102 bzw. 103 befinden sich in Schließposition, wenn der Zapfen 129 des Umlenkhebels 121 sich im mittleren parallelen Abschnitt 125 befindet. Sie befinden sich dagegen in voller Ausstellposition, wenn sich der Zapfen 129 im äußeren Abschnitt 123 (wie in Fig. 8 gezeigt) oder 127 befindet. Fig. 8 ist eine vergrößerte Darstellung der in Fahrtrichtung rechts liegenden Ausstelleinrichtung des hinteren Deckels in dessen Ausstellposition. Die zu dieser Ausstelleinrichtung bzw. der dazu gehörenden Kulisse gehörenden Teile sind mit c bezeichnet, wogegen die in Fahrtrichtung links liegende Ausstelleinrichtung bzw. Kulisse des hinteren Deckels 103 mit dem Buchstaben d gekennzeichnet ist. Die in Fahrtrichtung rechts liegende Ausstelleinrichtung des vorderen Deckels 102 trägt in ihren Teilen den Buchstaben a, die in Fahrtrichtung links liegende Ausstelleinrichtung bzw. Kulisse des vorderen Deckels den Buchstaben b.

Die Ausstelleinrichtungen 110a-d werden bei Betätigung der Antriebseinrichtung 104 im Uhrzeigersinn jeweils paarweise synchron aufeinanderzubewegt. Diese synchrone Bewegung wird durch Anlenkung der Ausstelleinrichtungen 110a-d über den sie jeweils tragenden Schlitten 113a-d an Antriebskabel 115a-d erreicht. Die Antriebskabel 115a und 115c der in Fahrtrichtung rechts gelegenen Ausstelleirrichtungen 110a bzw. 110d sind über ein Kabelverbindungsstück 140 an ein gemeinsames, mit der Antriebseirrichtung 104 verbundenes Antriebskabel 115 gekoppelt. Ebenso sind die in Fahrtrichtung links liegenden Ausstelleinrichtungen 110b bzw. 110d über die sie tragenden Schlitten 113c,d mittels der Antriebskabel 115b, 115d, die an ein Kabelverbindungsstück 140' angeschlossen sind, mit einem gemeinsamen Antriebskabel 115' mit der Antriebseinrichtung 104 verbunden. Diese direkte Verbindung aller Ausstelleinrichtungen mit einer einzigen Antriebseinrichtung 104 läßt sich alternativ auch dadurch lösen, daß auf der in Fahrtrichtung rechten Seite die Antriebskabel 115a und 115c bis zur Antriebseinrichtung 104 durchgeführt sind, und dort in zwei z.B. übereinanderliegende gleichzeitig betätigte Ritzel eingreifen . Analog dazu könnten ebenso auf der linken Fahrzeugseite die Ausstelleinrichtungen 110b und 110d direkt bis zur Antriebseinrichtung 104 durchgeführt sein.

Fig. 7 zeigt die Nullage der gesamten Einrichtung, in der sowohl der vordere als auch der hintere Deckel 102 bzw. 103 geschlossen sind. Die dabei für die jeweilige Deckellage maßgebliche Position des Zapfens 129a-d bezüglich des zugeordneten Kulissenschlitzes 122a-d ist durch eine gestrichelte Linie angedeutet. Ausgehend von dieser Nullage wird nachfolgend das Zusammenwirken der Teile bei einer Betätigung der Antriebseinrichtung 104 im Gegenuhrzeigersinn beschrieben. Bei Drehung der Antriebseinrichtung 104 nach links werden das Antriebskabel 115 und dementsprechend über das Kabelverbindungsstück 140 auch das Antriebskabel 115a bzw. 115c nach vorne gezogen. Dabei bewegen sich die Ausstelleinrichtungen 110a und 110c in der Zeichnung nach links. Dabei durchläuft der Zapfen 129a den Kulissenabschnitt 124a und bewirkt dabei ein Ausstellen des Ausstellhebels 111a. Der Zapfen 129c durchläuft einen Leerweg von rechts nach links auf dem Kulissenabschnitt 125c.

Analog dazu wird auf der linken Fahrzeugseite bei Drehung der Antriebseinrichtung 104 im Gegenuhrzeigersinn das Antriebskabel 115' im Bild nach links gezogen, wobei durch Ankoppelung des Kabels 115' und der Antriebskabel 115b bzw. 115d an das Kabelverbindungsstück 140' gleichzeitig die mit letzteren verbundenen Ausstelleinrichtungen 110b bzw. 110d im Bild nach rechts bewegt werden. Der für die jeweilige Deckelposition relevante Zapfen 129b bewirkt dabei im Zusammenspiel mit dem ansteigenden Schlitzabschnitt 124b eine Ausstellbewegung des Ausstellhebels 111b. Im Bereich des hinteren Deckels 103 fährt der Zapfen 129d gleichzeitig einen Leerweg von links nach rechts im Bereich des Schlitzabschnitts 125d. Somit werden während dieser Bewegung der Antriebseinrichtung 104 die Schlitten 113a und 113b bzw. 113c und 113d in eine voneinander entferntere Position gefahren. Während der vordere Deckel 102 dabei in Ausstellrichtung bewegt wird, verbleibt der hintere Deckel durch den Leerweg noch in seiner Schließposition.

Bei einer weiteren Bewegung im Gegenuhrzeigersinn werden die Schlitten 113a und 113b am vorderen Deckel bzw. die Schlitten 113c und 113d am hinteren Deckel 103 noch weiter voneinanderweg nach außen bewegt. Dabei durchlaufen die Zapfen 129a und 129b einen Leerweg 123a bzw. 123b, sodaß der vordere Deckel 102 in ausgestellter Position verbleibt. Gleichzeitig durchlaufen die Zapfen 129c und 129d die abfallenden Schlitzabschnitte 126c bzw. 126d, wodurch der Umlenkhebel 121c dem Ausstellhebel 111c und der Umlenkhebel 121d dem Ausstellhebel 111d eine nach oben gerichtete Schwenkbewegung aufzwingt die zum Ausstellen des hinteren Deckels 103 führt. In dieser Lage sind sowohl der vordere Deckel 102 als auch der hinter Deckel 103 in Ausstellposition.

Wenn ausgehend von der in Fig. 7 dargestellten Nullage die Antriebseinrichtung hingegen im Uhrzeigersinn bewegt wird, so vollzieht sich die Reihenfolge des Ausstellens der Deckel in umgekehrter Reihenfolge. Die Schlitten 113a-d werden mittels der Antriebskabel 115, 115' und der mit den letzteren Kabelverbindungsstücke 140, 140' gekoppelten Antriebskabel 115a, 115c bzw. 115b, 115d nach innen aufeinander zubewegt. Dabei fahren im Bereich des vorderen Deckels 102 die Zapfen 129a und 129b zunächst einen Leerweg längs des Schlitzabschnitts 125a bzw. 125b, sodaß der vordere Deckel zunächst geschlossen bleibt. Gleichzeitig sorgen die Zapfen 129c und 129d im Bereich des hinteren Deckels 103 im Zusammenspiel mit den ansteigenden Schlitzabschnitten 124c bzw. 124d eine Ausstellbewegung des hinteren Deckels 103. Bei einer weiteren Bewegung im Uhrzeigersinn fahren die Zapfen 129c, 129d im Bereich des hinteren Deckels 103 einen Leerweg längs der Schlitzabschnitte 123c bzw. 123d. Der hintere Deckel bleibt dabei in seiner Ausstellposition. Gleichzeitig sorgen im Bereich des vorderen Deckels 102 die Zapfen 129a und 129b im Zusammenspiel mit den abfallenden Schlitzabschnitten 126a bzw. 126b für eine Ausschwenkbewegung des Ausstellhebels 111a bzw. 111b, sodaß der vordere Deckel ebenfalls in Ausstellposition angehoben wird.
Die Schließung der Deckel 102, 103 erfolgt für beide vorstehend beschriebenen Bewegungsabläufe jeweils in umgekehrter Reihenfolge.

Obgleich voranstehend bevorzugte Ausführungsformen der Erfindung erläutert wurden, sind selbstverständlich zahlreiche Abänderungen und Modifikationen möglich. So können gegebenenfalls mehr als zwei Deckel 2 und 3 in Fahrzeuglängsrichtung hintereinander oder in Fahrzeugbreitenrichtung nebeneinander angeordnet werden und in analoger Weise entsprechend dem erfindungsgemäßen Prinzip mit einer einzigen gemeinsamen Antriebseinrichtung 4 betätigt werden. Auch ist die Erfindung nicht auf die beschriebenen Einzelheiten hinsichtlich der Ausbildungsform des Kulissenschlitzes 22 der jeweiligen Kulisse 17 beschränkt, sondern es können auch andere Kulissenschlitzausbildungen gewählt werden.

Vielmehr ist es beim erfindungsgemäß ausgebildeten Fahrzeugdach wesentlich, daß den jeweiligen Deckeln 2 und 3 synchron zueinander verschiebbare Kulissen bzw. Ausstelleinrichtungen zugeordnet sind, wobei die Kulissenschlitze derart ausgebildet sind, daß die mit der Kulisse aufgrund einer Relativbewegung zueinander zusammenarbeitende Ausstelleinrichtung bei dem einen Deckel einen Leerweg ohne Funktionsbeaufschlagung durchfährt, während bei der jeweils anderen Kulisse eine Funktionsbeaufschlagung der Ausstelleinrichtung in die jeweils gewünschte Bewegungsrichtung des zugeordneten Deckels bewirkt wird. Durch diese Auslegungsform können mehrere Deckel mit einer gemeinsamen Antriebseinrichtung 4 unabhängig voneinander betätigt werden, ohne daß man Arretierglieder benötigt, die den jeweiligen Deckeln und den zugeordneten Ausstelleinrichtungen zugeordnet sind. Hierdurch vereinfacht sich insbesondere die mechanische Auslegung der Ausstelleinrichtung und der die Betätigung bewirkenden Kulisseneinrichtungen.

### Bezugszeichen

- 1: Feste Dachfläche
- 2: Deckel vorne
- 3: Deckel hinten
- 4: Antriebseinrichtung insgesamt
- 5: Dachöffnung
- 5': Dachöffnung in Fig. 5
- 6: Rahmen
- 10: Austelleinrichtung insgesamt
- 11: Ausstellhebel
- 12: Schlepphebel
- 13: Leistenförmiger Grundkörper
- 14: Führungskabel
- 15,15': Antriebskabel
- 16: Schienenführung für Kulisse 17
- 17: Kulisse
- 18: Lagerbock für Ausstellhebel 11
- 19: Lagerbock für Umlenkhebel 21
- 20: Lagerbock für Schlepphebel 12
- 21: Umlenkhebel
- 22: Kulissenschlitz
- 23: Erster Schlitzabschnitt
- 24: Ansteigender Schlitzabschnitt
- 25: Parallel verlaufender Schlitzabschnitt
- 26: Abfallender Schlitzabschnitt
- 27: Parallel verlaufender Schlitzabschnitt (Auslaufende)
- 28: Ende des Umlenkhebels 21 für das Zusammenarbeiten mit dem Kulissenschlitz 22
- 29: Zapfen an diesem Ende 28
- 30: Anderes Ende von Umlenkhebel 21
- 31: Langloch in Ausstellhebel 11
- 32: Dachfester Drehpunkt von Ausstellhebel 11
- 33: Anderes, mit dem Deckel 2,3 verbundenes Ende von Ausstellhebel 11
- 34: Lasche
- 34 a, b: Schlitze in 34
- 35: Ende von Schlepphebel 12
- 36: Drehachse von Schlepphebel 12
- 37: Anderes, mit dem Deckel verbundenes Ende des Schlepphebels 12
- 38: Betätigungshandhabe
- 39: Bereich in Fig. 5
- 102: Deckel vorne
- 103: Deckel hinten
- 104: Antriebseinrichtung insgesamt
- 110 a,b,c,d: Ausstelleinrichtung insgesamt
- 111 a,b,c,d: Ausstellhebel
- 113: Schlitten
- 115,115',115a,b,c,d: Antriebskabel
- 116: Schienenführung für Schlitten
- 117 a-d: Kulisse
- 118: Lagerbolzen für Ausstellhebel 111
- 119: Lagerbolzen für Umlenkhebel 121
- 121 a-d: Umlenkhebel
- 122 a-d: Kulissenschlitz
- 123 a-d: Erster Schlitzabschnitt
- 124 a-d: Ansteigender Schlitzabschnitt
- 125 a-d: Parallel verlaufender Schlitzabschnitt
- 126 a-d: Abfallender Schlitzabschnitt
- 127 a-d: Parallel verlaufender Schlitzabschnitt (Auslaufende)
- 128: Ende des Umlenkhebels 121 für das Zusammenarbeiten mit dem Kulissenschlitz 122
- 129: Zapfen an diesem Ende 28
- 130: Anderes Ende von Umlenkhebel 21
- 131: Langloch in Ausstellhebel 11
- 133: Anderes, mit dem Deckel 102, 103 verbundenes Ende von Ausstellhebel 111
- 134: Lasche
- 134 a-d: Schlitze in 134
- 140,140': Kabelverbindungsstück
- A: Deckel 2, 3 bzw. 102, 103 ausgestellt
- Z: Deckel 2, 3 bzw. 102, 103 in Schließstellung

## Patentansprüche

1. Fahrzeugdach mit wenigstens zwei zum wahlweisen Verschließen oder wenigstens teilweisen Freigeben einer Dachöffnung (5; 5') in einer festen Dachfläche (1) dienenden Deckeln (2, 3; 102, 103), denen jeweils mindestens eine Ausstelleinrichtung (10; 110) zugeordnet ist, und mit einer mit den Ausstelleinrichtungen in Antriebsverbindung stehenden gemeinsamen Antriebseinrichtung (4; 104), **dadurch gekennzeichnet**, daß die Ausstelleinrichtungen (10; 110) derart ausgebildet sind, daß beim Betätigen der gemeinsamen Antriebseinrichtung (4; 104) die Ausstelleinrichtung(en) (10; 110) nur jeweils eines Deckels (2, 3; 102, 103) funktionsbeaufschlagt ist (sind), während die Ausstelleinrichtung(en) (10; 110) des anderen Deckels (3, 2; 103, 102) bzw. der anderen Deckel ohne Funktionsbeaufschlagung ist (sind).

2. Fahrzeugdach nach Anspruch 1, **dadurch gekennzeichnet**, daß jede der Ausstelleinrichtungen (10; 110) eine Ausstellmechanik (11, 12, 21; 111, 121) und eine Nockenbahnanordnung (17; 117) aufweist, die mittels der gemeinsamen Antriebseinrichtung (4; 104) jeweils relativ zueinander verschiebbar sind, wobei die Nockenbahnanordnungen (17; 117) mit Nockenbahnen (22; 122) versehen sind, die so gestaltet sind, daß die Ausstellmechanik(en) (11, 12, 21; 111, 121) jeweils nur eines Deckels (2, 3; 102, 103) im Zusammenwirken mit der (den) zugehörigen Nockenbahn(en) (22; 122) funktionsbeaufschlagt ist (sind), während die Ausstellmechanik(en) des bzw. der anderen Deckel im Zusammenwirken mit der (den) Nockenbahn(en) der zugeordneten Nockenbahnanordnung(en) einen Leerweg zurücklegt.

3. Fahrzeugdach nach Anspruch 2, **dadurch gekennzeichnet**, daß als Nockenbahnanordnungen mit Kulissenschlitzen (22; 122) versehene Kulissen (17; 117) vorgesehen sind.

4. Fahrzeugdach nach einem der vorhergehenden Ansprüche, **dadurch gekennzeichnet**, daß jedem Deckel (2, 3) eine Ausstelleinrichtung (10) zugeordnet ist.

5. Fahrzeugdach nach Ansprüchen 2, 3 und 4, **dadurch gekennzeichnet**, daß die Relativbewegung von Nockenbahnanordnung (17) und Ausstellmechanik (11, 12, 21) an einem Deckel (2 bzw. 3) entgegengesetzt zu der am anderen Deckel (3 bzw. 2) gerichtet ist.

6. Fahrzeugdach nach einem der Ansprüche 1 bis 3, **dadurch gekennzeichnet**, daß jedem Deckel (102, 103) zwei Ausstelleinrichtungen (110a, 110b; 110c, 110d) zugeordnet sind.

7. Fahrzeugdach nach Ansprüchen 2 oder 6, **dadurch gekennzeichnet**, daß die Relativbewegung der einem Deckel (102 bzw. 103) zugeordneten Nockenbahnanordnungen (117a, 117b bzw. 117c, 117d) gegenüber den jeweiligen Ausstellmechaniken (111a, 121a und 111b, 121b bzw. 111c, 121c und 111d, 121d) gegenläufig gerichtet ist.

8. Fahrzeugdach nach einem der Ansprüche 2 bis 7, **dadurch gekennzeichnet**, daß die Nockenbahnanordnungen (17) durch die Antriebseinrichtung (4) verschiebbar und die Ausstellmechaniken (11, 12, 21) ortsfest gelagert sind.

9. Fahrzeugdach nach einem der Ansprüche 2 bis 7, **dadurch gekennzeichnet**, daß die Ausstellmechaniken (111, 121) durch die Antriebseinrichtungen (104) verschiebbar und die Nockenbahnanordnungen (117) ortsfest gelagert sind.

10. Fahrzeugdach nach einem der Ansprüche 2 bis 9, **dadurch gekennzeichnet**, daß die Relativbewegung quer zur Fahrzeuglängsrichtung gerichtet ist.

11. Fahrzeugdach nach einem der Ansprüche 2 bis 10, **dadurch gekennzeichnet**, daß die Nockenbahnanordnungen (17) oder die Ausstellmechaniken (11, 12, 21) mit der Antriebseinrichtung (4) über ein einziges Antriebskabel (15 bzw. 15') in Antriebsverbindung stehen.

12. Fahrzeugdach nach einem der Ansprüche 2 bis 10, **dadurch gekennzeichnet**, daß jede Nockenbahnanordnung (17; 117) oder jede Ausstellmechanik (11, 12, 21; 111, 121) über ein gesondertes Antriebskabel (15; 115) mit der Antriebseinrichtung (4; 104) verbunden ist.

13. Fahrzeugdach nach Anspruch 12, **dadurch gekennzeichnet**, daß die Antriebskabel (115a und 115c bzw. 115b und 115d) für je eine Nockenbahnanordnung (117a und 117c bzw. 117b und 117d) eines Deckels (102 bzw. 103) auf derselben Fahrzeugseite über ein Kabelverbindungsstück (140; 140') mit jeweils einem Antriebskabel (115; 115') gekuppelt sind.

14. Fahrzeugdach nach einem der Ansprüche 3 bis 13, **dadurch gekennzeichnet**, daß der Kulissenschlitz (22; 122a-d) jeder Kulisse (17; 117a-d) drei parallel zur Richtung der Relativbewegung liegende Schlitzabschnitte (23; 123a-d; 25; 125a-d; 27; 127a-d) aufweist, von denen zwei außen auf gleicher Höhe liegende Schlitzabschnitte (23; 123a-d und 27; 127a-d) mit einem inneren, parallel beabstandet dazu liegenden Schlitzabschnitt (25; 125a-d) über einen schräg ansteigenden bzw. einen schräg abfallenden Schlitzabschnitt (24; 124a-d bzw. 26; 126a-d) verbunden sind.

15. Fahrzeugdach nach Anspruch 14, **dadurch gekennzeichnet**, daß dem inneren parallelen Schlitzabschnitt (25; 125a-d) die Schließposition und den zwei außenliegenden parallelen Schlitzabschnitten (23; 123a-d bzw. 25; 125a-d) eine volle Öffnungsposition des Deckels (2, 3 bzw. 102, 103) zugeordnet ist.

16. Fahrzeugdach nach einem der vorhergehenden Ansprüche, **dadurch gekennzeichnet**, daß die Ausstellmechanik (11, 12, 21; 111, 121) einen am Deckel (2, 3; 102, 103) drehbar und/oder parallel dazu verschiebbar angelenkten Ausstellhebel (11; 111a-d) umfaßt, der unmittelbar oder mittelbar durch Anlenkung an einen Umlenkhebel (21; 121a-d) durch die zugeordnete Nockenbahnanordnung (17; 117a-d) schwenkbar ist.

## Claims

1. A vehicle roof with two covers (2,3; 102, 103) which serve for optionally closing or at least partially opening a roof opening (5; 5') in a fixed roof area (1) and with which there is associated at least one push-out device (10; 110), and with a common drive means (4; 104) connected for drive to the push-out devices, characterised in that the push-out devices (10; 110) are so constructed that upon actuation of the common drive means (4; 104), the push-out device(s) (10; 110) of in each case only one cover (2, 3; 102, 103) can be rendered functional, while the push-out device(s) (10; 110) of the other cover(s) (3, 2; 103, 102) is not made functional.

2. A vehicle roof according to Claim 1, characterised in that each of the push-out devices (10; 110) comprises a push-out mechanism (11,12,21; 111, 121) and a cam path arrangement (17; 117) adapted in each case for relative movement in respect of each other by means of the common drive device (4; 104), whereby the cam path arrangements (17; 117) are provided with cam paths (22; 122) which are so configured that the push-out mechanism(s) (11, 12, 21; 111, 121) of in each case just one cover (2, 3; 102, 103), in conjunction with the associated cam path(s) (22; 122) is/are rendered functional while the push-out mechanism(s) of the other cover(s) in conjunction with the cam path(s) of the associated cam path arrangement(s) perform(s) a neutral movement.

3. A vehicle roof according to Claim 2, characterised in that the cam path arrangements provided are connecting links (17; 117) provided with slots (22; 122).

4. A vehicle roof according to one of the preceding Claims, characterised in that a push-out device (10) is associated with each cover (2, 3).

5. A vehicle roof according to Claims 2, 3 and 4, characterised in that the relative movement of cam path arrangement (17) and push-out mechanism (11, 12, 21) on one cover (2, 3) is directed in opposition to that on the other cover (3, 2).

6. A vehicle roof according to one of Claims 1 to 3, characterised in that two push-out devices (110a, 110b, 110c, 110d) are associated with each cover (102, 103).

7. A vehicle roof according to Claims 2 or 6, characterised in that the relative movement of the cam path arrangements (117a, 117b or 117c, 117d) associated with one cover (102, 103) is directed in opposition to the respective push-out mechanisms (111a, 121a and 111b, 121b or 111c, 121c and 111d, 121d).

8. A vehicle roof according to one of Claims 2 to 7, characterised in that the cam path arrangements (17) are mounted to be displaced by the drive means (4) while the push-out mechanisms (11, 12, 21) are stationary.

9. A vehicle roof according to one of Claims 2 to 7, characterised in that the push-out mechanisms (111, 121) are mounted to be displaced by the drive means (104) while the cam path arrangements (117) are stationary.

10. A vehicle roof according to one of Claims 2 to 9, characterised in that the relative movement is directed crosswise to the longitudinal direction of the vehicle.

11. A vehicle roof according to one of Claims 2 to 10, characterised in that the cam path arrangements (17) or the push-out mechanisms (11, 12, 21) have a driving connection to the drive means (4) via a single drive cable (15 or 15').

12. A vehicle roof according to one of Claims 2 to 10, characterised in that each cam path arrangement (17, 117) or each push-out mechanism (11, 12, 21; 111, 121) is connected to the drive means (4; 104) by a separate drive cable (15; 115).

13. A vehicle roof according to Claim 12, characterised in that the drive cables (115a and 115c or 115b and 115d) for in each case one cam path arrangement (117a and 117c or 117b and 117d) of a cover (102 or 103) on the same side of the vehicle are coupled to a respective drive cable (115; 115') via a cable connecting piece (140; 140').

14. A vehicle roof according to one of Claims 3 to 13, characterised in that the connecting link slot (22; 122a-d) of each connecting link (17; 117a-d) comprises three slot portions (23; 123a-d; 25; 125a-d; 27; 127a-d) disposed parallel with the direction of the relative movement of which two slot portions (23; 123a-d and 27; 127a-d) disposed at the same height and on the outside are connected to an inner slot portion (25; 125a-d) spaced apart therefrom via an obliquely rising or obliquely falling slot portion (24; 124a-d or 26; 126a-d).

15. A vehicle roof according to Claim 14, characterised in that the closed position is associated with the inner parallel slot portion (25; 125a-d) while a fully open position of the cover (2, 3 or 102, 103) is associated with the two outer parallel slot portions (23; 123a-d or 25; 125a-d).

16. A vehicle roof according to one of the preceding Claims, characterised in that the push-out mechanism (11, 12, 21; 111, 121) comprises, articulated on the cover (2, 3; 102, 103) to be rotatable and/or adapted for displacement parallel therewith, a push-out lever (11; 111a-d) which is pivotable by the associated cam path arrangement (17; 117a-d) directly or indirectly by being articulated on a shift lever (21; 121a-d).

## Revendications

1. Toit de véhicule comportant au moins deux panneaux (2, 3 ; 102, 103) servant au choix à fermer ou au moins libérer partiellement une ouverture (5, 5') d'une partie de toit fixe (1), panneaux auxquels est associé au moins un dispositif de débattement (10, 110), ainsi qu'une installation d'entraînement (4, 104), commune, coopérant dans le sens de l'entraînement avec les installations de débattement, caractérisé en ce que les installations de débattement (10, 110) sont réalisées pour qu'à la mise en oeuvre de l'installation d'entraînement commune (4, 104), la ou les installations de débattement (10, 110) ne coopèrent qu'avec un seul panneau (2, 3 ; 102, 103) alors que la ou les installations de débattement (10, 110) de l'autre panneau (3, 2 ; 103, 102) ou des autres panneaux, ne sont pas mises en oeuvre.

2. Toit de véhicule selon la revendication 1, caractérisé en ce que chacune des installations de débattement (10, 110) comporte un mécanisme de débattement (11, 12, 21 ; 111, 121) et un dispositif à chemin de cames (17, 117) pour être coulissés de manière relative par l'installation d'entraînement commune (4, 104), les dispositifs de chemin de cames (17, 117) étant munis de chemins de cames (22, 122) conçus pour que le ou les mécanismes de débattement (11, 12, 21 ; 111, 121) de chaque fois un seul panneau (2, 3 ; 102, 103) ne soient mis en oeuvre pour coopérer avec le ou les chemins de cames correspondants (22, 122) alors que le ou les mécanismes de débattement du ou de l'autre panneau parcourent un chemin à vide en coopérant avec le ou les dispositifs de chemins de cames associés aux (chemins de cames).

3. Toit de véhicule selon la revendication 2, caractérisé en ce que les dispositifs de chemins de cames sont des coulisses (17, 117) munies de fentes de coulisse (22, 122).

4. Toit de véhicule selon l'une des revendications précédentes, caractérisé en ce qu'à chaque panneau (2, 3) est associée une installation de débattement (10).

5. Toit de véhicule selon les revendications 2, 3, 4, caractérisé en ce que le mouvement relatif du dispositif à chemins de cames (17) et du mécanisme de débattement (11, 12, 21) d'un panneau (2, 3) est dirigé en sens opposé à celui associé à l'autre panneau (3, 2).

6. Toit de véhicule selon l'une des revendications 1 à 3, caractérisé en ce que deux installations de débattement (110a, 110b ; 110c et 110d) sont associées à chaque panneau (102, 103).

7. Toit de véhicule selon les revendications 2 ou 3, caractérisé en ce que le mouvement relatif des dispositifs à chemins de cames (117a, 117b ou 117c et 117d) associés à un panneau (102, 103) est dirigé en sens opposé par rapport au mécanisme de débattement respectif (111a, 121a et 111b et 121b ou 111c, 121c et 111d, 121d).

8. Toit de véhicule selon l'une des revendications 2 à 7, caractérisé en ce que les dispositifs à chemins de cames (17) sont coulissants par l'installation d'entraînement (4) et les mécanismes de débattement (11, 12, 21) sont montés fixes.

9. Toit de véhicule selon l'une des revendications 2 à 7, caractérisé en ce que les mécanismes de débattement (111, 121) sont coulissants par les installations d'entraînement (104) et les dispositifs de chemins de cames (117) sont montés fixes.

10. Toit de véhicule selon l'une des revendications 2 à 9, caractérisé en ce que le mouvement relatif est dirigé transversalement à la direction longitudinale du véhicule.

11. Toit de véhicule selon l'une des revendications 2 à 10, caractérisé en ce que les dispositifs de chemins de cames (17) ou les mécanismes de débattement (11, 12, 21) coopèrent avec l'installation d'entraînement (4) par un seul câble d'entraînement (15, 15').

12. Toit de véhicule selon l'une des revendications 2 à 10, caractérisé en ce que chaque dispositif de chemins de cames (17, 117) ou chaque mécanisme de débattement (11, 12, 21 ; 111, 121) est relié à l'installation d'entraînement (4, 104) par un câble d'entraînement (15, 115) particulier.

13. Toit de véhicule selon la revendication 12, caractérisé en ce que les câbles d'entraînement (115a et 115c ou 115b et 115d) pour chaque dispositif de chemins de cames (117a, 117c ou 117b et 117d) d'un panneau (102 ou 103) pour le même côté du véhicule sont couplés par une pièce de liaison de câble (140, 140') avec chaque fois un câble d'entraînement (115, 115').

14. Toit de véhicule selon l'une des revendications 3 à 13, caractérisé en ce que la fente à coulisse (22, 122a-d) de chaque coulisse (17, 117a-d) comporte trois segments de fente (23, 123a-d ; 25 ; 125a-d ; 27 ; 127a-d) situés parallèlement à la direction du mouvement relatif et dont deux segments de fente (23 ; 123a-d et 27 ; 127a-d) situés à la même hauteur, sont reliés à un segment de fente (25 ; 125a-d) intérieur, écarté parallèlement, par l'intermédiaire d'un segment de fente (24 ; 124a-d ou 26 ; 126a-d), montant en biais ou descendant en biais.

15. Toit de véhicule selon la revendication 14, caractérisé en ce qu'au segment de fente parallèle intérieur (25 ; 125a-d) est associée à la position de fermeture et aux deux segments de fente parallèles extérieurs (23 ; 123a-d ou 25 ; 125a-d) est associée une position d'ouverture complète du panneau (2, 3 ou 102, 103).

16. Toit de véhicule selon l'une des revendications précédentes, caractérisé en ce que le mécanisme de débattement (11, 12, 21 ; 111, 121) d'un panneau (2, 3 ; 102, 103) comprend un bras de débattement (11 ; 111a-d) rotatif et/ou articulé de manière coulissante parallèle, et qui peut pivoter directement ou indirectement par articulation à un levier de renvoi (21 ; 121a-d) par le dispositif à chemins de cames associé (17 ; 117a-d).
